(19) **Europäisches Patentamt**
**European Patent Office**
**Office européen des brevets**

(11) **EP 4 575 906 A1**

(12) **EUROPEAN PATENT APPLICATION**
published in accordance with Art. 153(4) EPC

(43) Date of publication:
**25.06.2025 Bulletin 2025/26**

(21) Application number: **23854691.5**

(22) Date of filing: **26.05.2023**

(51) International Patent Classification (IPC):
**G06N 3/067** (2006.01)     **G02F 1/09** (2006.01)
**G02F 1/13** (2006.01)     **G02F 3/00** (2006.01)
**G06E 3/00** (2006.01)     **G06N 3/09** (2023.01)

(52) Cooperative Patent Classification (CPC):
**G02F 1/09; G02F 1/13; G02F 3/00; G06E 3/00;
G06N 3/067; G06N 3/09**

(86) International application number:
**PCT/JP2023/019617**

(87) International publication number:
**WO 2024/038652 (22.02.2024 Gazette 2024/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.08.2022 JP 2022131346**

(71) Applicant: **Fujikura Ltd.
Tokyo 135-8512 (JP)**

(72) Inventors:
• **KUSAKA, Hiroyuki
Tokyo 135-8512 (JP)**
• **KASHIWAGI, Masahiro
Tokyo 135-8512 (JP)**

(74) Representative: **Plasseraud IP
104 Rue de Richelieu
CS92104
75080 Paris Cedex 02 (FR)**

(54) **OPTICAL COMPUTATION DEVICE, LEARNING METHOD FOR OPTICAL COMPUTATION DEVICE, AND MANUFACTURING METHOD FOR OPTICAL COMPUTATION DEVICE**

(57)     Provided is an optical computation device having a high class determination capability. An optical computation device (1) refers to correct intensity distributions ($I''1, I''2, ... , I''m$) so as to estimate, on the basis of a detected intensity distribution ($I'$) of signal light ($Ln$) detected by an optical detection section (12), a class to which information represented by an input intensity distribution ($I$) of signal light ($L0$) input into an optical computation section (11) belongs. A learning method (M) sets the correct intensity distributions ($I''1, I''2, ... , I''m$) so that a correct intensity distribution having a highest similarity to the detected intensity distribution $I'$ serves as a correct intensity distribution corresponding to the class $c$ to which the information represented by the input intensity distribution $I$ belongs.

FIG. 1

**Description**

Technical Field

The present invention relates to an optical computation device which carries out optical computation with use of an optical modulation element including a plurality of cells. The present invention further relates to a learning method and a manufacturing method for the optical computation device.

Background Art

There has been known an optical modulation element which includes a plurality of cells and which is designed to optically execute given computation by causing beams of signal light having passed through the respective cells to interfere with each other. The optical computation involving use of such an optical modulation element is advantageous in terms of that this can be carried out at higher speed and with lower power consumption as compared to electronic computation involving use of a processor. Further, by causing a plurality of optical modulation elements to sequentially act on signal light, it is possible to easily realize high-level optical computation which cannot be realized with a single optical modulation element.

Patent Literature 1 discloses an optical computation device which is called Diffractive Deep Neural Network (D$^2$NN), constituted with use of an optical modulation element such as those described above.

Citation List

[Patent Literature]

[Patent Literature 1]
International Publication No. WO 2021/2327170

Summary of Invention

Technical Problem

In class determination involving use of the optical computation device disclosed in Patent Literature 1, output signal light is concentrated at a position corresponding to a class to which information represented by input signal light belongs. This means that an optical computation capability of the optical modulation element is allocated not only to class determination, which is a task significant as information processing, but also to concentration of output signal light at a specific position, which is a task not significant as information processing. That is, the optical computation device disclosed in Patent Literature 1 has room for improvement of the class determination capability, in terms of that the optical computation capability of the optical modulation element having been allocated to a task not significant as information processing can be used for a task significant as information processing.

An aspect of the present invention was made in view of the above problem, and has an object to provide an optical computation device having high class determination capability. Solution to Problem

A learning method in accordance with an aspect of the present invention is a learning method for training an optical computation device, the optical computation device including: an optical computation section which includes an optical modulation element including a plurality of cells having phase modulation amounts which have been set independently of each other or phase modulation amounts which are settable independently of each other; an optical detection section which detects an intensity distribution of signal light output from the optical computation section; and an estimation section which refers to a plurality of correct intensity distributions corresponding to a respective plurality of classes and estimates, on a basis of the intensity distribution detected by the optical detection section, a class to which information represented by an intensity distribution of signal light input into the optical computation section belongs, the learning method including: setting the plurality of correct intensity distributions so that a correct intensity distribution having a highest similarity to the intensity distribution detected by the optical detection section serves as a correct intensity distribution corresponding to a class to which the information represented by the intensity distribution of the signal light input into the optical computation section belongs.

An optical computation device in accordance with an aspect of the present invention is an optical computation device including: an optical computation section which includes an optical modulation element including a plurality of cells having phase modulation amounts which have been set independently of each other or phase modulation amounts which are settable independently of each other; an optical detection section which detects an intensity distribution of signal light output from the optical computation section; and an estimation section which refers to a plurality of correct intensity distributions corresponding to a respective plurality of classes and estimates, on a basis of the intensity distribution detected by the optical detection section, a class to which information represented by an intensity distribution of signal light input into the optical computation section belongs, the plurality of correct intensity distributions being set so that a correct intensity distribution having a highest similarity to the intensity distribution detected by the optical detection section serves as a correct intensity distribution corresponding to a class to which the information represented by the intensity distribution of the signal light input into the optical computation section belongs. Advantageous Effects of Invention

In accordance with an aspect of the present invention, it is possible to provide an optical computation device having high class determination capability.

Brief Description of Drawings

Fig. 1 shows a side view illustrating a configuration of an optical computation device in accordance with a first embodiment of the present invention.
Fig. 2 shows a plan view and a cross-sectional view illustrating a first configuration example of an optical modulation element included in the optical computation device shown in Fig. 1.
Fig. 3 shows a cross-sectional view illustrating a second configuration example of an optical modulation element included in the optical computation device shown in Fig. 1.
Fig. 4 shows a perspective view illustrating a third configuration example of an optical modulation element included in the optical computation device shown in Fig. 1.
Fig. 5 shows a side view illustrating a configuration of an optical computation device in accordance with a second embodiment of the present invention.
Fig. 6 shows a plan view and a cross-sectional view illustrating a first configuration example of an optical modulation element included in the optical computation device shown in Fig. 5.
Fig. 7 shows a cross-sectional view illustrating a second configuration example of an optical modulation element included in the optical computation device shown in Fig. 5.
Fig. 8 shows a perspective view illustrating a third configuration example of an optical modulation element included in the optical computation device shown in Fig. 5.
Fig. 9 shows a flowchart illustrating a flow of a learning method in accordance with a third embodiment of the present invention.
Fig. 10 illustrates an embodiment of the learning method shown in Fig. 9. (a) is a graph on which correct intensity distributions having been set in a second setting process for the first epoch are overlaid, and (b) is a graph on which correct intensity distributions having been set in a second setting process for the 322nd epoch are overlaid.

Description of Embodiments

[First Embodiment]

(Configuration of Optical Computation Device)

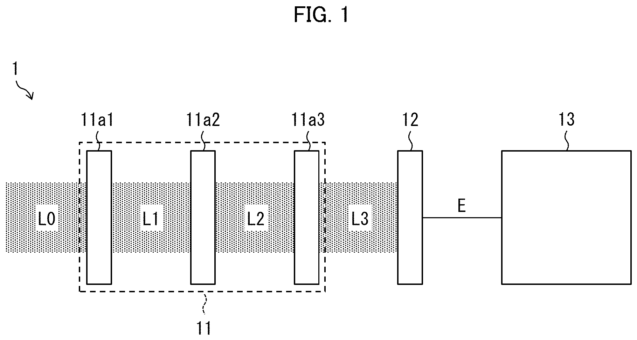

The following will describe, with reference to Fig. 1, a configuration of an optical computation device 1 in accordance with a first embodiment of the present invention. Fig. 1 shows a side view illustrating a configuration of the optical computation device 1.
As shown in Fig. 1, the optical computation device 1 includes an optical computation section 11, an optical detection section 12, and an estimation section 13.
The optical computation section 11 is constituted by at least one optical modulation element(s) 11a1 to 11an (n is any natural number of not less than 1; in the example shown in Fig. 1, n = 3). In the present embodiment, the optical modulation elements 11a1 to 11an are arranged in such a manner that an exit surface of an optical modulation element 11ai' (i' is a natural number of not less than 1 and not more than n-1) and an entrance surface of an optical modulation element 11ai'+1 face each other.
Note that the optical modulation elements 11a1 to 11an may be integrated together. For example, n optical diffraction layers formed in a structure (e.g., a dry gel) which allows signal light to pass therethrough may be used as the optical modulation elements 11a1 to 11an. A configuration example of the optical modulation elements 11a1 to 11an will be described later with reference to a different drawing.
Each optical modulation element 11ai (i is a natural number of not less than 1 and not more than n) is constituted by a plurality of cells having phase modulation amounts which have been set independently of each other or phase modulation amounts which are settable independently of each other. Each optical modulation element 11ai is a transmissive optical modulation element, and is configured to carry out optical computation by causing beams of transmission light subjected to phase modulation by the respective cells to interfere with each other. Note here that carrying out the optical computation means carrying out conversion of a two-dimensional intensity distribution of signal light by converting a two-dimensional intensity distribution indicative of information before computation into a two-dimensional intensity distribution indicative of information after the computation.

The optical modulation element 11a1 carries out optical computation with respect to signal light L0 input into the optical computation section 11. An intensity distribution I of signal light L0 (hereinafter, such an intensity distribution may sometimes be referred to as an "input intensity distribution") represents information (e.g., an image) belonging to any one of a predetermined plurality of classes c1, c2, ... , cm (m is any natural number of not less than 2). Signal light Li' output from the optical modulation element 11ai' is input into the optical modulation element 11ai'+1. The optical modulation element 11ai'+1 carries out optical computation with respect to the signal light Li' output from the optical modulation element 11ai', that is, the signal light Li' indicative of a result of the optical computation carried out by the optical modulation element 11ai'.

The optical detection section 12 is a means which detects signal light Ln output from the optical computation section 11 and which generates an electric signal E indicative of an intensity distribution I' of the detected signal light Ln (hereinafter, such an intensity distribution may sometimes be referred to as a "detected intensity distribution"). In the present embodiment, what is used as the optical detection section 12 is an image sensor constituted by photoelectric conversion cells (e.g., CCDs or CMOSs) arranged in a matrix. Note here that the optical detection section 12 is not limited to the image sensor. For example, what is used as the optical detection section 12 may be a sensor array constituted by a plurality of photoelectric conversion elements (e.g., photodiodes) arranged in predetermined positions. The electric signal E generated by the optical detection section 12 is input into the estimation section 13.

The estimation section 13 is a means which refers to correct intensity distributions I"1, I"2, ... , I"m corresponding to a respective plurality of classes c1, c2, ... , cm so as to estimate, on the basis of a detected intensity distribution I', a class $c \in \{c1, c2, ... , cm\}$ to which information represented by the input intensity distribution I belongs. In the present embodiment, what is used as the estimation section 13 is a computer. The class c estimated by the estimation section 13 is displayed on a display connected to the estimation section 13, for example.

The correct intensity distributions I"1, I"2, ... , I"m which are referred to by the estimation section 13 are set so that a correct intensity distribution having a highest similarity to the detected intensity distribution I' serves as a correct intensity distribution corresponding to the class c to which the information represented by the input intensity distribution I belongs. This configuration which selects, among the classes c1, c2, ... , cm, a class corresponding to a correct intensity distribution having a highest similarity to the detected intensity distribution I' enables correct estimation of a class to which information represented by the input intensity distribution I belongs. A learning method M for setting the correct intensity distributions I"1, I"2, ... I"m in the above-described manner will be described later with reference to a different drawing.

Note here that the present embodiment employs a configuration in which signal light L0 having been modulated by input information is input into the optical computation device 1. However, the present invention is not limited to this. Alternatively, for example, it is possible to employ a configuration in which input information and carrier light are input into the optical computation device 1. Such a configuration can be realized by, for example, a configuration in which an optical modulation element which generates signal light L0 by modulating the carrier light with the input information is added to a location preceding to the optical computation section 11. In this case, the optical modulation element to be added may be integrated with the optical modulation elements 11a1 to 11an, which constitute the optical computation section 11.

Further, in a case where each of the cells of the optical modulation element 11ai has a phase modulation amount which is variable, the optical computation device 1 may be provided with a control section which sets a phase modulation amount of each of the cells of the optical modulation element 11ai. This makes it possible to freely change content of optical computation to be executed by the optical computation device 1.

Further, in a case where n optical diffraction layers formed in a dry gel are used as the optical modulation elements 11a1 to 11an, the gel is preferably a gel which shrinks while keeping a similar shape when subjected to dehydration shrinkage; for example, the gel is preferably a gel used in the Implosion Fabrication process. With this, by drying a swollen gel in which n optical diffraction layers are formed, it is possible to easily manufacture an optical computation section 11 in which the n optical diffraction layers are arranged with high precision.

(Configuration Example of Transmissive Optical Modulation Element)

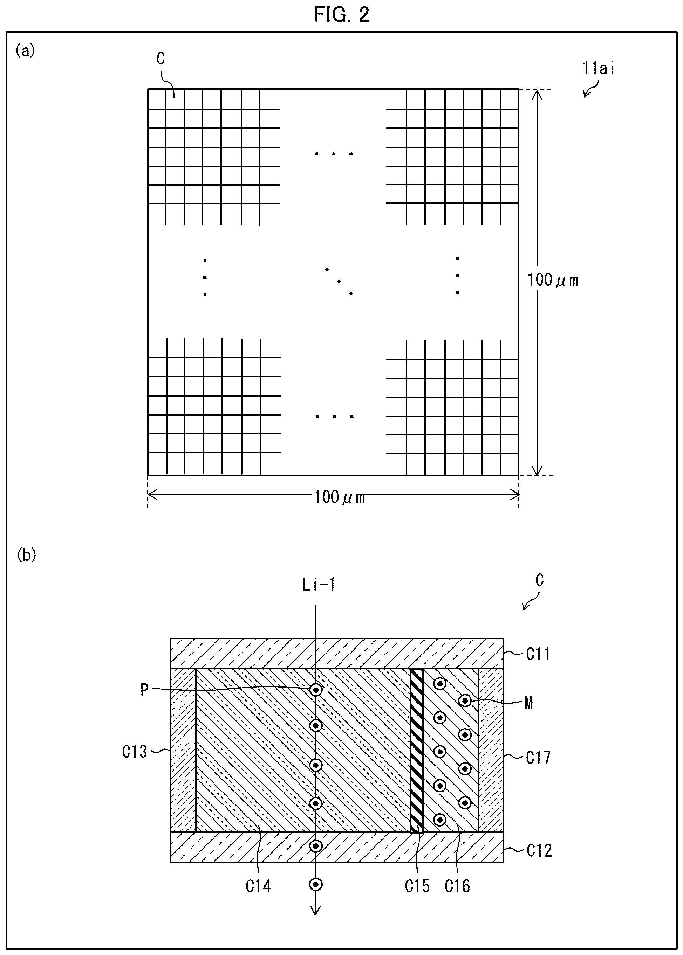

The following will describe, with reference to Fig. 2, a configuration example of the optical modulation element 11ai included in the optical computation device 1. (a) of Fig. 2 is a plan view of an optical modulation element 11ai in accordance with the present specific example. (b) of Fig. 2 is a cross-sectional view of a cell C constituting the optical modulation element 11ai in accordance with the present specific example.

As shown in (a) of Fig. 2, the optical modulation element 11ai is constituted by a plurality of cells C having phase modulation amounts which are settable independently of each other. When signal light Li-1 enters the optical modulation element 11ai, beams of the signal light Li-1 having passed through the cells C interfere with each other while being subjected to phase modulation, so that signal light Li indicative of a calculation result is formed.

Each of the cells C constituting the optical modulation element 11ai is a microcell. The "microcell" herein refers to a cell having a cell size of less than 10 $\mu$m. Further, the "cell size" refers to a square root of an area of a cell. For example, in a case where the microcell has a square shape in a plan view, the cell size of the microcell refers to a length of a side of the microcell. A lower limit of the cell size of the microcell is 1 nm, for example.

The optical modulation element 11ai shown in (a) of Fig. 2 is constituted by $200 \times 200$ cells C arranged in a matrix. Each of the cells C has a square shape of 500 nm $\times$ 500 nm in a plan view, and the optical modulation element 11ai has a square shape of 100 $\mu$m $\times$ 100 $\mu$m in a plan view.

For example, as shown in (b) of Fig. 2, each of the cells C constituting the optical modulation element 11ai can be constituted by a polarizing plate C11, a polarizing plate C12, a first electrode C13, a magnetization free layer C14, an insulating layer C15, a magnetization fixed layer C16, and a second electrode C17.

The polarizing plate C11 and the polarizing plate C12 are arranged so as to face each other. The first electrode C13, the magnetization free layer C14, the insulating layer C15, the magnetization fixed layer C16, and the second electrode C17 are stacked in this order and are sandwiched between the polarizing plate C11 and the polarizing plate C12. Here, a direction in which the first electrode C13, the magnetization free layer C14, the insulating layer C15, the magnetization fixed layer C16, and the second electrode C17 are stacked is orthogonal to a direction in which the polarizing plate C11 and the polarizing plate C12 are stacked. Thus, a first side surface of the magnetization free layer C14 is in surface contact with one main surface of the polarizing plate C11, and a second side surface of the magnetization free layer C14 which second side surface is opposed to the first side surface is in surface contact with one main surface of the polarizing plate C12. The signal light Li-1 (1) enters an inside of the magnetization free layer C 14 via the polarizing plate C11, (2) passes through the magnetization free layer C14, and (3) exits to an outside of the magnetization free layer C14 via the polarizing plate C12.

The magnetization free layer C14 is made of, for example, a soft magnetic material (e.g., CoFeB) having electric conductivity and light transmissivity. The magnetization fixed layer C16 is made of, for example, a hard magnetic material (e.g., permalloy) having electric conductivity. Selected as each of the polarizing plate C11 and the polarizing plate C12 is a polarizing plate which selectively allows a polarization component having a polarization direction P being in parallel with a magnetization direction M of the magnetization fixed layer C16 to transmit therethrough. (b) of Fig. 2 shows, as an example, a case where the magnetization direction M and the polarization direction P are in parallel with both the main surface of the polarizing plate C11 and the main surface of the magnetization fixed layer C16.

When an electric potential difference is provided between the first electrode C13 and the second electrode C17, a tunnel effect occurs and a spin current (a flow of spin-polarized electrons) is injected from the magnetization fixed layer C16 through the insulating layer C15 into the magnetization free layer C14 so as to magnetize the magnetization free layer C14. Here, the magnetization occurring in the magnetization free layer C14 is magnetization which is in parallel with the magnetization direction M of the magnetization fixed layer C16, that is, magnetization which is in parallel with the polarization direction P of the signal light Li-1 entering the magnetization free layer C14 through the polarizing plate C11. This causes a phase of the signal light Li-1 to be delayed by a transverse Kerr effect during a process of transmission in the magnetization free layer C14.

Here, a phase-shift amount of the signal light Li-1 in the cell C is determined depending on a magnitude of magnetization in the magnetization free layer C14. The magnitude of the magnetization in the magnetization free layer C14 is determined depending on a magnitude of the spin current injected into the magnetization free layer C14. The magnitude of the spin current injected into the magnetization free layer C14 is determined depending on the electric potential difference provided between the first electrode C13 and the second electrode C17. Thus, regulating the electric potential difference provided between the first electrode C13 and the second electrode C17 can set the phase modulation amount of the cell C at a desired value.

The description of the present configuration example has dealt with the cell C having a similar configuration to that of a magnetoresistive random access memory (MRAM) of spin transfer torque (STT) type. However, this is not limitative. For example, a cell C having a similar configuration to that of a MRAM of spin orbit torque (SOT) type may be used. Note that such a cell C can be realized by removing, from the structure indicated in (b) of Fig. 2, the insulating layer C15, the magnetization fixed layer C16, and the second electrode C17, for example. In this case, for example, it is possible to efficiently inject a spin flow into the magnetization free layer C14 by incorporating heavy metal into the first electrode C13 and giving a pulsed voltage or a pulsed current to the first electrode C13.

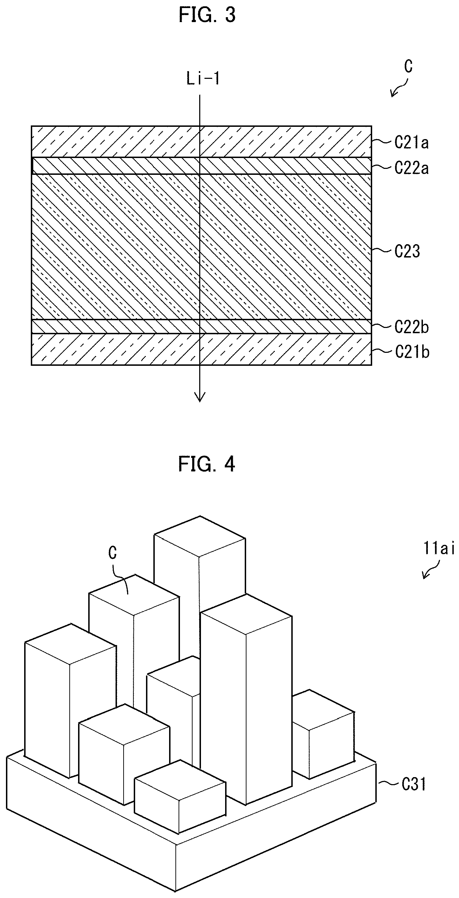

Further, the cell C may be configured in a similar manner to a cell of a liquid crystal display (LCD). In this case, for example, as shown in Fig. 3, the cell C is constituted by a first glass substrate C21a, a first transparent electrode C22a, a liquid crystal layer C23, a second transparent electrode C22b, and a second glass substrate C21b. The first glass substrate C21a, the first transparent electrode C22a, the liquid crystal layer C23, the second transparent electrode C22b, and the second glass substrate C21b are stacked in this order from a side from which the signal light Li-1 enters.

The signal light Li-1 (1) passes through the first glass substrate C21a and the first transparent electrode C22a, (2) passes through the liquid crystal layer C23, and (3) passes through the second transparent electrode C22b and the second glass substrate C21b. The liquid crystal layer C23 is constituted by liquid crystal molecules oriented in a direction which is parallel with a main surface of the glass substrate C21, and has a refractive index corresponding to an electric potential difference between the first transparent electrode C22a and the second transparent electrode C22b. Thus, the signal light Li-1 is subjected to phase modulation when passing through the liquid crystal layer C23. The phase modulation amount of the cell C can be set at a desired value by regulating the electric potential difference provided between the first transparent electrode C22a and the second transparent electrode C22b.

Note that the optical modulation element 11ai can alternatively be constituted by a plurality of cells C which have thicknesses having been set independently of each other. Fig. 4 is an enlarged perspective view of a part of the optical modulation element 11ai constituted by the plurality of cells C which have thicknesses having been set independently of each other.

The optical modulation element 11ai shown in Fig. 4 is constituted by a transparent substrate C31 and a plurality of pillars formed on an upper surface of the transparent substrate C31. Each of the pillars is structure that has a quadrangular prism shape and that has a square bottom surface having sides each having a length equal to that of a cell size, and functions as a cell C.

The signal light Li-1 (1) enters the pillar through the upper surface, (2) passes through the pillar, (3) passes through the transparent substrate C31, and (4) is emitted from a lower surface of the transparent substrate C31. A phase modulation amount of the signal light Li-1 passing through each cell C is determined depending on a height of a pillar constituting the cell C. That is, signal light Li-1 passing through a cell C constituted by a high pillar has a large phase modulation amount, whereas signal light Li-1 passing through a cell C constituted by a low pillar has a small phase modulation amount. Note that each of the cells C has a fixed phase modulation amount.

[Second Embodiment]

(Configuration of Optical Computation Device)

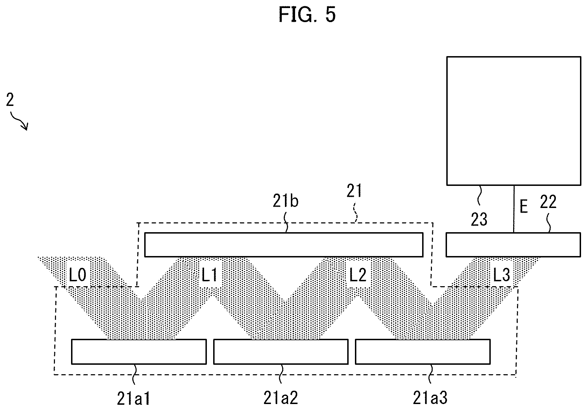

The following will describe, with reference to Fig. 5, a configuration of an optical computation device 2 in accordance with a second embodiment of the present invention. Fig. 5 shows a side view illustrating a configuration of the optical computation device 2.

As shown in Fig. 5, the optical computation device 2 includes an optical computation section 21, an optical detection section 22, and an estimation section 23.

The optical computation section 21 is constituted by at least one optical modulation element(s) 21a1 to 21an (n is any natural number of not less than 1; in the example shown in Fig. 5, n = 3) and a mirror 21b. In the present embodiment, the optical modulation elements 21a1 to 21an are arranged such that their entrance/exit surfaces are included in a single plane. The mirror 21b is disposed so that its reflection surface faces the entrance/exit surfaces of the optical modulation elements 21a1 to 21an.

Note that the optical modulation elements 21a1 to 21an may be integrated together. For example, n optical diffraction layers formed in a structure (e.g., a dry gel) which allows signal light to pass therethrough may be used as the optical modulation elements 21a1 to 21an. Alternatively, the optical modulation elements 21a1 to 21an may be buried in a single substrate, or n areas of a single optical modulation substrate may be used as the optical modulation elements 21a1 to 21an. A configuration example of the optical modulation elements 21a1 to 21an will be described later with reference to a different drawing.

Each optical modulation element 21ai (i is a natural number of not less than 1 and not more than n) is constituted by a plurality of cells having phase modulation amounts which have been set independently of each other or phase modulation amounts which are settable independently of each other. Each optical modulation element 21ai is a reflective optical modulation element. Each optical modulation element 21ai carries out optical computation by causing beams of reflected light having been subjected to phase modulation by the respective cells to interfere with each other. Note here that carrying out optical computation means carrying out conversion of two-dimensional intensity distribution of signal light by converting a two-dimensional intensity distribution indicative of information before computation into a two-dimensional intensity distribution indicative of information after the computation.

The optical modulation element 21a1 carries out optical computation with respect to signal light L0 input into the optical computation section 21. An intensity distribution I of signal light L0 (hereinafter, such an intensity distribution may sometimes be referred to as an "input intensity distribution") indicates information (e.g., an image) belonging to any one of a predetermined plurality of classes $c_1, c_2, \ldots, c_m$ (m is any natural number of not less than 2). Signal light Li' output from an optical modulation element 21ai' (i' is a natural number of not less than 1 and not more than n-1) is reflected by the mirror 21b, and thereafter is input into an optical modulation element 21ai'+1. The optical modulation element 21ai'+1 carries out optical computation with respect to the signal light Li' output from the optical modulation element 21ai', that is, the signal light Li' indicative of a result of the optical computation carried out by the optical modulation element 21ai'.

The optical detection section 22 is a means which detects signal light Ln output from the optical computation section 21 and which generates an electric signal E indicative of an intensity distribution I' of the detected signal light Ln (hereinafter, such an intensity distribution may sometimes be referred to as a "detected intensity distribution"). In the present embodiment, what is used as the optical detection section 22 is an image sensor constituted by photoelectric conversion cells (e.g., CCDs or CMOSs) arranged in a matrix. Note here that the optical detection section 22 is not limited to the image sensor. For example, what is used as the optical detection section 22 may be a sensor array constituted by a plurality of photoelectric conversion elements (e.g., photodiodes) arranged in predetermined positions. The electric signal E generated by the optical detection section 22 is input into the estimation section 23.

The estimation section 23 is a means which refers to correct intensity distributions $I''_1, I''_2, \ldots, I''_m$ corresponding to a respective plurality of classes $c_1, c_2, \ldots, c_m$ so as to estimate, on the basis of a detected intensity distribution I', a class $c \in \{c_1, c_2, \ldots, c_m\}$ to which information represented by the input intensity distribution I belongs. In the present embodiment, what is used as the estimation section 23 is a computer. The class c estimated by the estimation section 23 is displayed on a display connected to the estimation section 23, for example.

The correct intensity distributions $I''_1, I''_2, \ldots, I''_m$ which are referred to by the estimation section 23 are set so that a correct intensity distribution having a highest similarity to the detected intensity distribution I' serves as a correct intensity distribution corresponding to the class c to which the information represented by the input intensity distribution I belongs. This configuration which selects, among the classes $c_1, c_2, \ldots, c_m$, the class corresponding to the correct intensity distribution having a highest similarity to the detected intensity distribution I' enables correct estimation of the class to which the information represented by the input intensity distribution I belongs. A learning method M for setting the correct intensity distributions $I''_1, I''_2, \ldots I''_m$ in the above-described manner will be described later with reference to a different drawing.

Note here that the present embodiment employs a configuration in which signal light L0 having been modulated with input information is input into the optical computation device 2. However, the present invention is not limited to this. Alternatively, for example, it is possible to employ a configuration in which input information and carrier light are input into the optical computation device 2. Such a configuration can be realized by, for example, a configuration in which an optical modulation element which generates signal light L0 by modulating carrier light with input information is added to a position preceding to the optical computation section 21. In this case, the optical modulation element to be added may be integrated with the optical modulation elements 21a1 to 21an, which constitute the optical computation section 21.

Further, in a case where each of the cells of the optical modulation element 21ai has a phase modulation amount which is variable, the optical computation device 2 may be provided with a control section which sets a phase modulation amount of each of the cells of the optical modulation element 21ai. This makes it possible to freely change content of optical computation to be executed by the optical computation device 2.

Note that, in a case where n optical diffraction layers formed in a dry gel are used as the optical modulation elements 21a1 to 21an, the gel is preferably a gel which shrinks while keeping a similar shape when subjected to dehydration shrinkage; for example, the gel is preferably a gel used in the Implosion Fabrication process. With this, by drying a swollen gel in which n optical diffraction layers are formed, it is possible to easily manufacture an optical computation section 21 in which the n optical diffraction layers are arranged with high precision.

(Configuration Example of Reflective Optical Modulation Element)

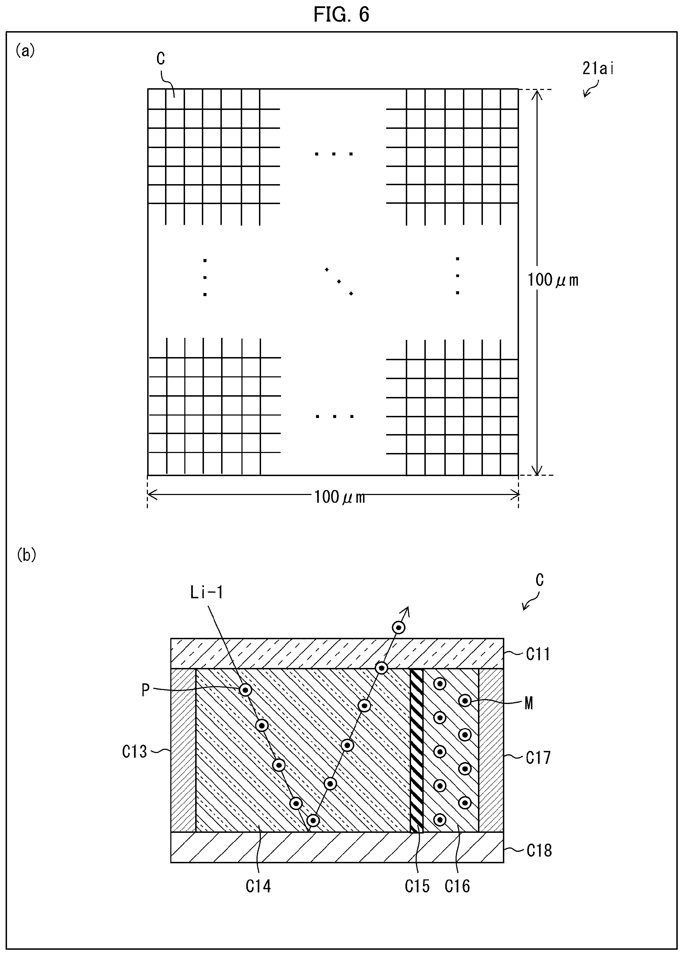

The following will describe, with reference to Fig. 6, a configuration example of the optical modulation element 21ai included in the optical computation device 2. (a) of Fig. 6 is a plan view of an optical modulation element 21ai in accordance with the present specific example. (b) of Fig. 6 is a cross-sectional view of a cell C constituting the optical modulation element 21ai in accordance with the present specific example.

As shown in (a) of Fig. 6, the optical modulation element 21ai is constituted by a plurality of cells C having phase modulation amounts which are settable independently of each other. When signal light Li-1 enters the optical modulation element 21ai, beams of the signal light Li-1 having been reflected by the cells C while being subjected to phase modulation interfere with each other, so that signal light Li indicative of a calculation result is formed.

Each of the cells C constituting the optical modulation element 21ai is a microcell. The "microcell" herein refers to a cell having a cell size of less than 10 $\mu$m. Further, the "cell size" refers to a square root of an area of a cell. For example, in a case where the microcell has a square shape in a plan view, the cell size of the microcell refers to a length of a side of the microcell. A lower limit of the cell size of the microcell is 1 nm, for example.

The optical modulation element 21ai shown in (a) of Fig. 6 is constituted by $200 \times 200$ cells C arranged in a matrix. Each of the cells C has a square shape of 500 nm $\times$ 500 nm in a plan view, and the optical modulation element 21ai has a square shape of 100 $\mu$m $\times$ 100 $\mu$m in a plan view.

For example, as shown in (b) of Fig. 6, each of the cells C constituting the optical modulation element 21ai can be constituted by a polarizing plate C11, a reflection plate C18, a first electrode C13, a magnetization free layer C14, an insulating layer C15, a magnetization fixed layer C16, and a second electrode C17.

The polarizing plate C11 and the reflection plate C18 are arranged so as to face each other. The first electrode C13, the magnetization free layer C14, the insulating layer C15, the magnetization fixed layer C16, and the second electrode C17 are stacked in this order and are sandwiched between the reflection plate C11 and the polarizing plate C18. Here, a direction in which the first electrode C13, the magnetization free layer C14, the insulating layer C15, the magnetization fixed layer C16, and the second electrode C17 are stacked is orthogonal to a direction in which the polarizing plate C11 and the reflection plate C18 are stacked. Thus, a first side surface of the magnetization free layer C14 is in surface contact with one main surface of the polarizing plate C11, and a second side surface of the magnetization free layer C14 which second side surface is opposed to the first side surface is in surface contact with one main surface of the reflection plate C18. The signal light Li-1 enters (1) an inside of the magnetization free layer C 14 via the polarizing plate C11, (2) is reflected by the reflection plate C18, and (3) exits to an outside of the magnetization free layer C14 via the polarizing plate C11.

The magnetization free layer C14 is made of, for example, a soft magnetic material (e.g., CoFeB) having electric conductivity and light transmissivity. The magnetization fixed layer C16 is made of, for example, a hard magnetic material (e.g., permalloy) having electric conductivity. Selected as the polarizing plate C11 is a polarizing plate which selectively allows a polarization component having a polarization direction P which is in parallel with a magnetization direction M of the magnetization fixed layer C16 to transmit therethrough. (b) of Fig. 6 shows, as an example, a case where the magnetization direction M and the polarization direction P are in parallel with both the main surface of the polarizing plate C11 and the main surface of the magnetization fixed layer C16.

When an electric potential difference is provided between the first electrode C13 and the second electrode C17, a tunnel effect occurs and a spin current (a flow of spin-polarized electrons) is injected from the magnetization fixed layer C16 through the insulating layer C15 into the magnetization free layer C14 so as to magnetize the magnetization free layer C14. Here, the magnetization occurring in the magnetization free layer C14 is magnetization which is in parallel with the magnetization direction M of the magnetization fixed layer C16, that is, magnetization which is in parallel with the polarization direction P of the signal light Li-1 entering the magnetization free layer C14 through the polarizing plate C11. This causes a phase of the signal light Li-1 to be delayed by a transverse Kerr effect during a process of transmission in the magnetization free layer C14.

Here, a phase-shift amount of the signal light Li-1 in the cell C is determined depending on a magnitude of the magnetization in the magnetization free layer C14. The magnitude of the magnetization in the magnetization free layer C 14 is determined depending on a magnitude of the spin current injected into the magnetization free layer C14. The magnitude of the spin current injected into the magnetization free layer C14 is determined depending on the electric potential difference provided between the first electrode C13 and the second electrode C17. Thus, regulating the electric potential difference provided between the first electrode C13 and the second electrode C17 can set the phase modulation of the cell C at a desired value.

The description of the present configuration example has dealt with the cell C having a similar configuration to that of a magnetoresistive random access memory (MRAM) of spin transfer torque (STT) type. However, this is not limitative. For example, a cell C having a similar configuration to that of a MRAM of spin orbit torque (SOT) type may be used. Note that such a cell C can be realized by removing, from the structure indicated in (b) of Fig. 6, the insulating layer C15, the magnetization fixed layer C16, and the second electrode C17, for example. In this case, for example, it is possible to efficiently inject a spin flow into the magnetization free layer C14 by incorporating heavy metal into the first electrode C13 and giving a pulsed voltage or a pulses current to the first electrode C13.

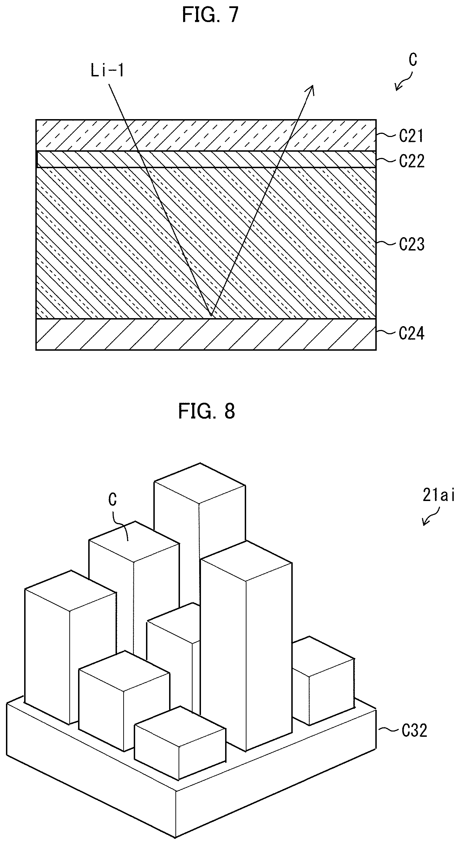

Further, the cell C can be configured in a similar manner to a cell of a liquid crystal on silicon (LCOS). In this case, for example, as shown in Fig. 7, the cell C is constituted by a glass substrate C21, a transparent electrode C22, a liquid crystal layer C23, and a reflective electrode C24. The glass substrate C21, the transparent electrode C22, the liquid crystal layer C23, and the reflective electrode C24 are stacked in this order from a side from which the signal light Li-1 enters.

The signal light Li-1 (1) passes through the glass substrate C21 and the transparent electrode C22, (2) passes through the liquid crystal layer C23, (3) is reflected by the reflective electrode C24, (4) passes through the liquid crystal layer C23, and (5) passes through the transparent electrode C22 and the glass substrate C21. The liquid crystal layer C23 is constituted by liquid crystal molecules oriented in a direction which is in parallel with a main surface of the glass substrate C21, and has a refractive index corresponding to an electric potential difference between the transparent electrode C22 and the reflective electrode C24. Thus, the signal light Li-1 is subjected to phase modulation when passing through the liquid crystal layer C23. The phase modulation amount of the cell C can be set at a desired value by regulating the electric potential difference provided between the transparent electrode C22 and the reflective electrode C24.

The reflective optical modulation element 21ai can alternatively be constituted by a plurality of cells C which have thicknesses having been set independently of each other. Fig. 8 is an enlarged perspective view of a part of the optical modulation element 21ai constituted by the plurality of cells C which have thicknesses having been set independently of each other.

The optical modulation element 21ai shown in Fig. 8 is constituted by a reflection plate C32 and a plurality of pillars formed on an upper surface of the reflection plate C32. Each of the pillars is structure that has a quadrangular prism shape and that has a square bottom surface having sides each having a length equal to that of a cell size, and functions as a cell C.

The signal light Li-1 (1) enters the pillar through the upper surface, (2) passes through the pillar, (3) is reflected by the reflection plate C32, (4) passes through the pillar, and (5) is emitted from the upper surface of the pillar. A phase modulation amount of the signal light Li-1 reflected by each cell C is determined depending on a height of a pillar constituting the cell C. That is, signal light Li-1 reflected by a cell C constituted by a high pillar has a large phase modulation amount, and signal light reflected by a cell C constituted by a low pillar has a small phase modulation amount. Note that each of the cells C has a fixed phase modulation amount.

[Third Embodiment]

(Flow of Learning Method)

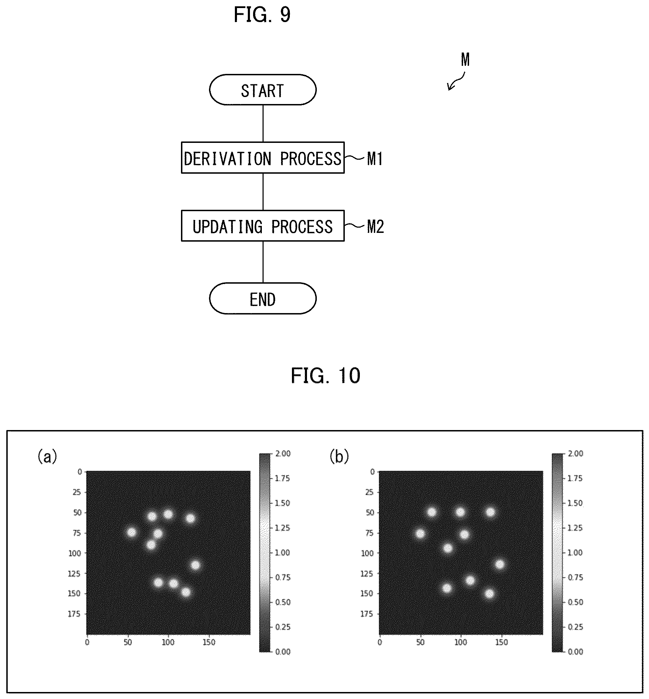

The following will describe, with reference to Fig. 9, a flow of a learning method M in accordance with a third embodiment of the present invention. Fig. 9 shows a flowchart illustrating a flow of the learning method M. The following description will discuss the flow of the learning method M in accordance with the present embodiment which is applied to the optical computation device 1 in accordance with the first embodiment. Note that the learning method M in accordance with the present embodiment is also applicable to the optical computation device 2 in accordance with the second embodiment. The learning method M can be carried out by, for example, using a computer (e.g., the estimation section 13 included in the optical computation device 1 or the estimation section 23 included in the optical computation device 2) including a processor and a memory. In this case, the processor carries out the learning method M by executing a program stored in the memory.

The learning method M uses, as training data, p (p is a natural number of not less than 2) input intensity distributions I(1), I(2), ... , I(p) to optimize correct intensity distributions I"k corresponding to the respective classes ck. It is assumed here that a class ck(j) to which information represented by each input intensity distribution I(j) (j is a natural number of not less than 1 and not more than p) belongs is known and is usable as training data. In the following description, this class $ck(j) \in \{c1, c2, ... , cm\}$ will be referred to as a correct class corresponding to an input intensity distribution I(j), and a correct intensity distribution $I"k(j) \in \{I"1, I"2, ... , I"m\}$ corresponding to this class ck(j) will be referred to as a correct intensity distribution corresponding to the input intensity distribution I(j).

In a case where the optical modulation element 11ai is constituted by q cells, a phase modulation amount $\Theta i$ is expressed as a q-dimensional vector. Meanwhile, in a case where the optical detection section 12 is constituted by r cells, a correct intensity distribution I"k is expressed as an r-dimensional vector. Since the number of optical modulation elements 11a1 to 11an is n and the number of classes Y1 to Ym is m, n q-dimensional vector(s) (i.e., $n \times q$ numerical value(s)) and m r-dimensional vectors (i.e., $m \times r$ numerical values) are set by the learning method M.

In the learning method M, p detected intensity distributions I'(1), I'(2), ... , I'(p) are used. In a case where an intensity distribution of signal light L0 input into the optical computation section 11 is an input intensity distribution I(j), each detected intensity distribution I'(j) represents an intensity distribution of signal light Ln detected by the optical detection section 12. In a case where the optical detection section 12 is constituted by r cells, each detected intensity distribution I'(j) is expressed as an r-dimensional vector, similarly to the correct intensity distribution I"k.

The learning method M includes a derivation process M1 and an updating process M2. By executing these processes repeatedly, values of phase modulation amounts $\Theta1, \Theta2, ... , \Theta n$ and values of correct intensity distributions I"1, I"2, ... , I"m are sequentially optimized. The optimization herein means minimization of a loss function L (described later). It is assumed here that, before start of execution of the learning method M, the phase modulation amounts $\Theta1, \Theta2, ... , \Theta n$ and the correct intensity distributions I"1, I"2, ... , I"m are set at appropriate initial values (e.g., random initial values).

The derivation process M1 is a process for deriving detected intensity distributions I'(1), I'(2), ... , I'(p). In the present embodiment, by using an electromagnetic field simulation, the processor derives, for each input intensity distribution I(j), a detected intensity distribution I'(j), which is an intensity distribution of signal light Ln detected by the optical detection section 12 in a case where an intensity distribution of signal light L0 input into the optical computation section 11 is an input intensity I(j). In an electromagnetic field simulation in a derivation process M1 for the first epoch, an initial value is used as a phase modulation amount $\Theta i$ of each cell constituting each optical modulation element 11ai. In each of electromagnetic field simulations in derivation processes M1 for the second and later epochs, a value having been set in an updating process M2 for the previous epoch is used as a phase modulation amount $\Theta i$ of each cell constituting each optical modulation element 11ai.

The updating process M2 is a process for setting (a) values of the phase modulation amounts $\Theta1, \Theta2, ... , \Theta n$ and (b) values of the correct intensity distributions I"1, I"2, ... , I"m. In the present embodiment, what is used as the loss function L is a differentiable function of the phase modulation amounts $\Theta1, \Theta2, ... , \Theta n$ and the correct intensity distributions I"1, I"2, ... , I"m, the differentiable function satisfying the later-described conditions A and B with respect to the correct intensity distributions I"1, I"2, ... , I"m. By using the error back propagation method, the processor updates the values of the phase modulation amounts $\Theta1, \Theta2, ... , \Theta n$ and the values of the correct intensity distributions I"1, I"2, ... , I"m so that the loss function L takes a smaller value than a current value.

Condition A: Regarding a detected intensity distribution I'(j) derived on the basis of each input intensity distribution I(j) in the derivation process M1, the function takes a smaller value as a similarity between that detected intensity distribution I'(j) and a correct intensity distribution I"k(j) corresponding to the input intensity distribution I(j) becomes higher.

Condition B: Regarding a detected intensity distribution I'(j) derived on the basis of each input intensity distribution I(j) in the derivation process M1, the function takes a larger value as a similarity between that detected intensity distribution I'(j) and a correct intensity distribution I"k(k#k(j)) which is not the correct intensity distribution I"k(j) corresponding to the input intensity distribution I(j) becomes higher.

Setting the values of the correct intensity distributions I"1, I"2, ... , I"m by using the above-described loss function L enables the following. That is, by selecting, among the classes c1, c2, ... , cm, a class corresponding to a correct intensity distribution having a highest similarity to the detected intensity distribution I', it is possible to correctly estimate a class to which information represented by the input intensity distribution I belongs.

Note that arbitrary distributions can be used as the correct intensity distributions I"1, I"2, ... , I"m. For example, in a case where the phase modulation amounts $\Theta1$, $\Theta2$, ... , $\Theta n$ are set so that the signal light Ln output from the optical computation section 11 is concentrated at a point Pk corresponding to the class ck to which the information represented by the input intensity distribution I belongs, what is used as the correct intensity distribution I"k may be, e.g., (a) a delta function distribution in which intensities are concentrated on the concentrated point Pk or (b) a Gaussian function distribution in which intensities are localized around the concentrated point Pk. In this case, setting the correct intensity distribution I"k means the same as setting a correct concentrated point Pk.

The following will describe some specific examples of the loss function L.

(First Specific Example of Loss Function)

The following will study, as the correct intensity distribution I"k, a Gaussian distribution I"k(X,Y)=exp[-(X-Xk)$^2$-(Y-Yk)$^2$]. Note here that (Xk,Yk) is coordinates for the correct concentrated point Pk on a light reception surface of the optical detection section 12. A

By using p input intensity distributions I(1), I(2), ... , I(p) as training data, the loss function L is defined as below. In the updating process M2, the peak position (Xk,Yk) of the correct intensity distribution I"k is updated so that the loss function L takes a small value.

$$L = \frac{1}{p}\sum_{j=1}^{p}[(X'(j) - Xk(j))^2 + (Y'(j) - Yk(j))^2] + \sum_{j=1}^{p}\sum_{k \neq k(j)} I'(j)(Xk,Yk)$$

Note here that (X'(j),Y'(j)) is a peak position of the detected intensity distribution I'(j) corresponding to each input intensity distribution I(j), and (Xk(j),Yk(j)) is a peak position of the correct intensity distribution I"k(j) corresponding to the input intensity distribution I(j). Further, I'(j)(Xk,Yk) is a value of the detected intensity distribution I'(j) corresponding to the input intensity distribution I(j), and is a value at the peak position (Xk,Yk) of a correct intensity distribution I"k which is not the correct intensity distribution I"k(j) corresponding to the input intensity distribution I(j). The phase modulation amounts $\Theta1$, $\Theta2$, ... , $\Theta n$ are implicitly included in the loss function L via X'(j),Y'(j).

In a case where an Euclidean distance between the peak positions is regarded as a similarity between the correct intensity distribution I"k and the detected intensity distribution I'(j), the above-described loss function L satisfies the conditions A and B described above. Therefore, setting the values of the correct intensity distributions I"1, I"2, ... , I"m by using the above-described loss function L enables the following. That is, by selecting, among the classes c1, c2, ... , cm, a class corresponding to a correct intensity distribution having a highest similarity to the detected intensity distribution I', it is possible to correctly estimate a class to which information represented by the input intensity distribution I belongs.

For the optical computation device 1 configured to identify the numbers of 0 to 9 included in an image, the inventors of the present invention carried out optimization by use of the loss function L in accordance with the present specific example. The number m of the classes c1, c2, ... , cm, that is, the number m of the correct intensity distributions I"(1), I"(2), ... , I"(m) was m = 10. The number q of the cells of each optical modulation element 11ai was q = 200 × 200, and the number r of the cells of the optical detection section 12 was r = 200 × 200. The number p of the input intensity distributions I(1), I(2), ... , I(p) used as training data was p = 55000 (5500 for each class).

(a) of Fig. 10 is a graph on which correct intensity distributions I"(1), I"(2), ... , I"(m) having been set in an updating process M2 for the first epoch are overlaid, and (b) of Fig. 10 is a graph on which correct intensity distributions I"(1), I"(2), ... , I"(m) having been set in an updating process M2 for the 322nd epoch are overlaid.

In Fig. 10, the following phenomenon can be observed. That is, as a result of repeating the derivation process M1 and the updating process M2, peak positions of the correct intensity distributions I"(1), I"(2), ... , I"(m) were converged while being fluctuated appropriately and accordingly identification of the numbers gradually became easier. An accuracy rate (val_acc) was actually calculated, so that the following result was confirmed. That is, an accuracy rate was 73.38% at the time of completion of an updating process M2 for the first epoch, and an accuracy rate had been increased to 92.8% at the time of completion of an updating process M2 for the 322nd epoch.

In a case where the correct intensity distributions I"(1), I"(2), ... , I"(m) were fixed, that is, in a case where updating of the correct intensity distributions I"(1), I"(2), ... , I"(m) was omitted in the updating process M2, an accuracy rate was 87.2% at the time of completion of an updating process M2 for a 200th epoch. This suggests that use of correct intensity distributions I"(1), I"(2), ... , I"(m) which are variable will make it possible to identify the numbers at a higher accuracy rate.

(Second Specific Example of Loss Function)

A second specific example of the loss function L can be a loss function of ArcFace type. The ArcFace-type loss function L can be defined as below, for example.

The following will study (a) an r-dimensional vector $Wk = |"k/|I"k|$ obtained by standardizing the correct intensity distribution I"k and (b) an r-dimensional vector $xj = I'(j)/ | I'(j) |$ obtained by standardizing the detected intensity distribution I'(j). Then, with use of an angle made by the correct intensity distribution I"k and the detected intensity distribution I'(j), that is, an angle $\theta_{k,j} = \cos^{-1}(Wk^T xj)$ made by the vector Wk and the vector xj, the loss function L is defined according to the below-indicated formula. In the below-indicated formula, s is a scaling parameter and $\mu$ is a margin parameter. The scaling parameter s and the margin parameter $\mu$ are optimized as hyper parameters. The phase modulation amounts $\Theta 1, \Theta 2, ... , \Theta n$ are implicitly included in the loss function L via I'(j), i.e., via $\theta_{k,j}$.

$$L = -\frac{1}{p}\sum_{j=1}^{p} \log(\frac{\exp[s\{\cos(\theta_{k(j),j} + \mu)\}]}{\exp[s\{\cos(\theta_{k(j),j} + \mu)\}] - \sum_{k \neq k(j)} \exp[s\{\cos(\theta_{k,j})\}]})$$

In a case where the angle $\theta_{k,j}$ made by the correct intensity distribution I"k and the detected intensity distribution I'(j) is regarded as a similarity between the correct intensity distribution I"k and the detected intensity distribution I'(j), the above-described loss function L satisfies the conditions A and B described above. Therefore, setting the values of the correct intensity distributions I"1, I"2, ... , I"m by using the above-described loss function L enables the following. That is, by selecting, among the classes c1, c2, ... , cm, a class corresponding to a correct intensity distribution having a highest similarity to the detected intensity distribution I', it is possible to correctly estimate a class to which information represented by the input intensity distribution I belongs.

(Third Specific Example of Loss Function)

A third specific example of the loss function L can be a loss function of SphereFace type. The SphereFace-type loss function L can be defined as below, for example.

The following will study (a) an r-dimensional vector $Wk = |"k/|I"k|$ obtained by standardizing the correct intensity distribution I"k and (b) an r-dimensional vector $xj = I'(j)/ | I'(j) |$ obtained by standardizing the detected intensity distribution I'(j). Then, with use of an angle made by the correct intensity distribution I"k and the detected intensity distribution I'(j), that is, an angle $\theta_{k,j} = \cos^{-1}(Wk^T xj)$ made by the vector Wk and the vector xj, the loss function L is defined according to the below-indicated formula. In the below-indicated formula, $\mu$ is a margin parameter. The margin parameter $\mu$ is optimized as a hyper parameter. The phase modulation amounts $\Theta 1, \Theta 2, ... , \Theta n$ are implicitly included in the loss function L via I'(j), i.e., via $\theta_{k,j}$.

$$L = -\frac{1}{p}\sum_{j=1}^{p} \log(\frac{\exp[\cos(\mu\theta_{k(j),j})]}{\exp[\cos(\mu\theta_{k(j),j})] - \sum_{k \neq k(j)} \exp[\cos(\theta_{k,j})]})$$

In a case where the angle $\theta_{k,j}$ made by the correct intensity distribution I"k and the detected intensity distribution I'(j) is regarded as a similarity between the correct intensity distribution I"k and the detected intensity distribution I'(j), the above-described loss function L satisfies the conditions A and B described above. Therefore, setting the values of the correct intensity distributions I"1, I"2, ... , I"m by using the above-described loss function L enables the following. That is, by selecting, among the classes c1, c2, ... , cm, a class corresponding to a correct intensity distribution having a highest similarity to the detected intensity distribution I', it is possible to correctly estimate a class to which information represented by the input intensity distribution I belongs.

(Fourth Specific Example of Loss Function)

A fourth specific example of the loss function L can be a loss function of CosFace type. The CosFace-type loss function L can be defined as below, for example.

The following will study (a) an r-dimensional vector $Wk = I''k/|I''k|$ obtained by standardizing the correct intensity distribution $I''k$ and (b) an r-dimensional vector $xj = I'(j)/|I'(j)|$ obtained by standardizing the detected intensity distribution $I'(j)$. Further, by using an angle made by the correct intensity distribution $I''k$ and the detected intensity distribution $I'(j)$, that is, an angle $\theta_{k,j} = \cos^{-1}(Wk^T xj)$ made by the vector Wk and the vector xj, the loss function L is defined according to the below-indicated formula. In the below-indicated formula, s is a scaling parameter and $\mu$ is a margin parameter. The scaling parameter s and the margin parameter $\mu$ are optimized as hyper parameters. The phase modulation amounts $\Theta 1, \Theta 2, \dots, \Theta n$ are implicitly included in the loss function L via $I'(j)$, i.e., via $\theta_{k,j}$.

$$L = -\frac{1}{p}\sum_{j=1}^{p}\log\left(\frac{\exp[s\{\cos(\theta_{k(j),j}) - \mu\}]}{\exp[s\{\cos(\theta_{k(j),j}) - \mu\}] - \sum_{k \neq k(j)}\exp[s\{\cos(\theta_{k,j})\}]}\right)$$

In a case where the angle $\theta_{k,j}$ made by the correct intensity distribution $I''k$ and the detected intensity distribution $I'(j)$ is regarded as a similarity between the correct intensity distribution $I''k$ and the detected intensity distribution $I'(j)$, the above-described loss function L satisfies the conditions A and B described above. Therefore, setting the values of the correct intensity distributions $I''1, I''2, \dots, I''m$ by using the above-described loss function L enables the following. That is, by selecting, among the classes $c1, c2, \dots, cm$, a class corresponding to a correct intensity distribution having a highest similarity to the detected intensity distribution I', it is possible to correctly estimate a class to which information represented by the input intensity distribution I belongs.

(Fifth Specific Example of Loss Function)

A fifth specific example of the loss function L can be a combination type of the second specific example, the third specific example, and the fourth specific example. The loss function L of the combination type can be defined as below, for example.

The following will study (a) an r-dimensional vector $Wk = I''k/|I''k|$ obtained by standardizing the correct intensity distribution $I''k$ and (b) an r-dimensional vector $xj = I'(j)/|I'(j)|$ obtained by standardizing the detected intensity distribution $I'(j)$. Then, with use of an angle made by the correct intensity distribution $I''k$ and the detected intensity distribution $I'(j)$, that is, an angle $\theta_{k,j} = \cos^{-1}(Wk^T xj)$ made by the vector Wk and the vector xj, the loss function L is defined according to the below-indicated formula. In the below-indicated formula, s is a scaling parameter and $\mu 1, \mu 2,$ and $\mu 3$ are margin parameters. The scaling parameter s and the margin parameters $\mu 1, \mu 2,$ and $\mu 3$ are optimized as hyper parameters. The phase modulation amounts $\Theta 1, \Theta 2, \dots, \Theta n$ are implicitly included in the loss function L via $I'(j)$, i.e., via $\theta_{k,j}$.

$$L = -\frac{1}{p}\sum_{j=1}^{p}\log\left(\frac{\exp[s\{\cos(\mu_1\theta_{k(j),j} + \mu_2) - \mu_3\}]}{\exp[s\{\cos(\mu_1\theta_{k(j),j} + \mu_2) - \mu_3\}] - \sum_{k \neq k(j)}\exp[s\{\cos(\theta_{k,j})\}]}\right)$$

In a case where the angle $\theta_{k,j}$ made by the correct intensity distribution $I''k$ and the detected intensity distribution $I'(j)$ is regarded as a similarity between the correct intensity distribution $I''k$ and the detected intensity distribution $I'(j)$, the above-described loss function L satisfies the conditions A and B described above. Therefore, setting the values of the correct intensity distributions $I''1, I''2, \dots, I''m$ by using the above-described loss function L enables the following. That is, by selecting, among the classes $c1, c2, \dots, cm$, a class corresponding to a correct intensity distribution having a highest similarity to the detected intensity distribution I', it is possible to correctly estimate a class to which information represented by the input intensity distribution I belongs.

(Sixth Specific Example of Loss Function)

A sixth specific example of the loss function L can be a loss function of a center loss type. The center-loss-type loss function L can be defined as below, for example.

By using an inner product $I"k^T I'(j)$ of the correct intensity distribution $I"k$ and the detected intensity distribution $I'(j)$, the loss function L is defined according to the below-indicated formula. In the below-indicated formula, $\beta j$ is a bias, $yj$ is a class center position, and $\lambda$ is a balance parameter. The bias $\beta j$, the class center position $yj$, and the balance parameter $\lambda$ are optimized as hyper parameters. The phase modulation amounts $\Theta 1$, $\Theta 2$, ... , $\Theta n$ are implicitly included in the loss function L via $I'(j)$.

$$L = -\frac{1}{p}\sum_{j=1}^{p}\log\left(\frac{\exp[I"k(j)^T I'j + \beta k(j)]}{\sum_{k=1}^{m}\exp[I"k^T I'j + \beta k]}\right) + \frac{\lambda}{2}\sum_{j=1}^{p}\|I'j - \gamma k(j)\|$$

In a case where the inner product $I"k^T I'(j)$ of the correct intensity distribution $I"k$ and the detected intensity distribution $I'(j)$ is regarded as a similarity between the correct intensity distribution $I"k$ and the detected intensity distribution $I'(j)$, the above-described loss function L satisfies the conditions A and B described above. Therefore, setting the values of the correct intensity distributions $I"1$, $I"2$, ... , $I"m$ by using the above-described loss function L enables the following. That is, by selecting, among the classes c1, c2, ... , cm, a class corresponding to a correct intensity distribution having a highest similarity to the detected intensity distribution $I'$, it is possible to correctly estimate a class to which information represented by the input intensity distribution I belongs.

Aspects of the present invention can also be expressed as follows:
A learning method in accordance with a first aspect of the present invention is a learning method for training an optical computation device, the optical computation device including: an optical computation section which includes an optical modulation element including a plurality of cells having phase modulation amounts which have been set independently of each other or phase modulation amounts which are settable independently of each other; an optical detection section which detects an intensity distribution of signal light output from the optical computation section; and an estimation section which refers to a plurality of correct intensity distributions corresponding to a respective plurality of classes and estimates, on a basis of the intensity distribution detected by the optical detection section, a class to which information represented by an intensity distribution of signal light input into the optical computation section belongs, the learning method including: setting the plurality of correct intensity distributions so that a correct intensity distribution having a highest similarity to the intensity distribution detected by the optical detection section serves as a correct intensity distribution corresponding to a class to which the information represented by the intensity distribution of the signal light input into the optical computation section belongs.

According to the above configuration, an optical computation capability of the optical modulation element having been allocated to concentration of output signal light at a specific position, which is a task not significant as information processing, can be used for class determination, which is a task significant as information processing. Thus, according to the above configuration, it is possible to provide an optical computation device having a high class determination capability.

A learning method in accordance with a second aspect of the present invention is a learning method configured such that, in the learning method in accordance with the first aspect of the present invention, a plurality of input intensity distributions I(1), I(2), ... , I(p) (p is any natural number of not less than 2) and, among the plurality of classes c1, c2, ... , cm (m is any natural number of not less than 2), a class ck(j) to which information represented by each input intensity distribution I(j) (j is a natural number of not less than 1 and not more than p) belongs are used as training data; and the plurality of correct intensity distributions $I"1$, $I"2$, ... , $I"m$ are set by repeating (a) a derivation process and (b) an updating process, (a) the derivation process deriving, by use of an electromagnetic field simulation, a detected intensity distribution $I'(j)$ which is an intensity distribution of signal light detected by the optical detection section in a case where the intensity distribution of the signal light input into the optical computation section is the input intensity distribution I(j), (b) the updating process updating the plurality of correct intensity distributions $I"1$, $I"2$, ... , $I"m$ so that a loss function L takes a small value, (1) the loss function L taking a smaller value as a similarity between the detected intensity distribution $I'(j)$ and, among the plurality of correct intensity distributions $I"1$, $I"2$, ... , $I"m$, a correct intensity distribution $I"k(j)$ corresponding to the class ck(j) increases, and (2) the loss function L taking a larger value as a similarity between the detected intensity distribution $I'(j)$ and, among the plurality of correct intensity distributions $I"1$, $I"2$, ... , $I"m$, a correct intensity distribution $I"k(k\neq k(j))$ which is not the correct intensity distribution $I"k(j)$ corresponding to the class ck(j) increases.

According to the above configuration, it is possible to efficiently set a plurality of correct intensity distributions with use of a computer and/or the like.

A learning method in accordance with a third aspect of the present invention is a learning method configured such that, in the learning method in accordance with the second aspect of the present invention, the similarity is an Euclidean distance between a peak position (Xk(j),Yk(j)) of the correct intensity distribution $I"k(j)$ and a peak position (X'(j),Y'(j)) of the detected intensity distribution $I'(j)$; and the loss function L is defined by the following formula:

$$L = \frac{1}{p}\sum_{j=1}^{p}[(X'(j) - Xk(j))^2 + (Y'(j) - Yk(j))^2] + \sum_{j=1}^{p}\sum_{k \neq k(j)} I'(j)(Xk,Yk)$$

where I'(j)(Xk,Yk) is a value of the detected intensity distribution I'(j) at a peak position (Xk,Yk) of a correct intensity distribution I"k which is not the correct intensity distribution I"k(j).

According to the above configuration, estimation of the class to which the information represented by the intensity distribution of the signal light input into the optical computation section belongs can be carried out with high precision on the basis of the Euclidean distance between the peak position (Xk(j),Yk(j)) of the correct intensity distribution I"k(j) and the peak position (X'(j),Y'(j)) of the detected intensity distribution I'(j).

A learning method in accordance with a fourth aspect of the present invention is a learning method configured such that, in the learning method in accordance with the second aspect of the present invention, the similarity is an angle $\theta_{k,j}$ made by a correct intensity distribution I"k and the detected intensity distribution I'(j); and the loss function L is an ArcFace-type loss function, a SphereFace-type loss function, a CosFace-type loss function, or a loss function of a combination type, each of which is defined by using the angle $\theta_{k,j}$.

According to the above configuration, estimation of the class to which the information represented by the intensity distribution of the signal light input into the optical computation section belongs can be carried out with high precision on the basis of the angle $\theta_{k,j}$ made by the correct intensity distribution I"k and the detected intensity distribution I'(j).

A learning method in accordance with a fifth aspect of the present invention is a learning method configured such that, in the learning method in accordance with the second aspect of the present invention, the similarity is an inner product I"k$^{T}$I'(j) of a correct intensity distribution I"k and the detected intensity distribution I'(j); and the loss function L is a loss function of a center loss type defined by using the inner product I"k$^{T}$I'(j).

According to the above configuration, estimation of the class to which the information represented by the intensity distribution of the signal light input into the optical computation section belongs can be carried out with high precision on the basis of the inner product I"k'$^{T}$I'(j) of the correct intensity distribution I"k and the detected intensity distribution I'(j).

A learning method in accordance with a sixth aspect of the present invention is a manufacturing method for manufacturing an optical computation device, the optical computation device including: an optical computation section which includes an optical modulation element including a plurality of cells having phase modulation amounts which have been set independently of each other or phase modulation amounts which are settable independently of each other; an optical detection section which detects an intensity distribution of signal light output from the optical computation section; and an estimation section which refers to a plurality of correct intensity distributions corresponding to a respective plurality of classes and estimates, on a basis of the intensity distribution detected by the optical detection section, a class to which information represented by an intensity distribution of signal light input into the optical computation section belongs, the manufacturing method including: training the optical computation device by using a learning method recited in any one of the first to fifth aspects.

According to the above configuration, an optical computation capability of the optical modulation element having been allocated to concentration of output signal light at a specific position, which is a task not significant as information processing, can be used for class determination, which is a task significant as information processing. Thus, according to the above configuration, it is possible to manufacture an optical computation device having a high class determination capability.

An optical computation device in accordance with a seventh aspect of the present invention is an optical computation device including: an optical computation section which includes an optical modulation element including a plurality of cells having phase modulation amounts which have been set independently of each other or phase modulation amounts which are settable independently of each other; an optical detection section which detects an intensity distribution of signal light output from the optical computation section; and an estimation section which refers to a plurality of correct intensity distributions corresponding to a respective plurality of classes and estimates, on a basis of the intensity distribution detected by the optical detection section, a class to which information represented by an intensity distribution of signal light input into the optical computation section, the plurality of correct intensity distributions being set so that a correct intensity distribution having a highest similarity to the intensity distribution detected by the optical detection section serves as a correct intensity distribution corresponding to a class to which the information represented by the intensity distribution of the signal light input into the optical computation section belongs.

According to the above configuration, an optical computation capability of the optical modulation element having been allocated to concentration of output signal light at a specific position, which is a task not significant as information processing, can be used for class determination, which is a task significant as information processing. Thus, according to the above configuration, it is possible to provide an optical computation device having a high class determination capability.

An optical computation device in accordance with an eighth aspect of the present invention is an optical computation device configured such that, in the optical computation device in accordance with the seventh aspect of the present invention, the optical computation section includes a plurality of optical diffraction layers formed in a dry gel, each of the plurality of optical diffraction layers serving as the optical modulation element.

According to the above configuration, it is possible to easily provide an optical computation device in which the plurality of optical diffraction layers each serving as the optical modulation element are arranged with high precision.

An optical computation device in accordance with a ninth aspect of the present invention is an optical computation device configured such that, in the optical computation device in accordance with the seventh aspect of the present invention, the optical computation section includes an optical modulation substrate including a plurality of areas each serving as the optical modulation element and a mirror disposed so as to face the plurality of areas.

According to the above configuration, it is possible to easily provide an optical computation device in which the plurality of areas each serving as the optical modulation element are arranged with high precision.

[Supplementary Note]

The present invention is not limited to the foregoing embodiments, but can be modified by a person skilled in the art within the scope of the claims. The present invention also encompasses, in its technical scope, any embodiment derived by combining technical means disclosed in the foregoing embodiments.

Reference Signs List

1, 2: optical computation device
11, 21: optical computation section
11a1 to 11a3: optical modulation element (transmissive type)
21a1 to 21a3: optical modulation element (reflective type)
12, 22: optical detection section
13, 23: estimation section

**Claims**

1. A learning method for training an optical computation device, the optical computation device including: an optical computation section which includes an optical modulation element including a plurality of cells having phase modulation amounts which have been set independently of each other or phase modulation amounts which are settable independently of each other; an optical detection section which detects an intensity distribution of signal light output from the optical computation section; and an estimation section which refers to a plurality of correct intensity distributions corresponding to a respective plurality of classes and estimates, on a basis of the intensity distribution detected by the optical detection section, a class to which information represented by an intensity distribution of signal light input into the optical computation section belongs, the learning method comprising:
setting the plurality of correct intensity distributions so that a correct intensity distribution having a highest similarity to the intensity distribution detected by the optical detection section serves as a correct intensity distribution corresponding to a class to which the information represented by the intensity distribution of the signal light input into the optical computation section belongs.

2. The learning method according to claim 1, wherein:

a plurality of input intensity distributions $I(1), I(2), ... , I(p)$ (p is any natural number of not less than 2) and, among the plurality of classes $c1, c2, ... , cm$ (m is any natural number of not less than 2), a class $ck(j)$ to which information represented by each input intensity distribution $I(j)$ (j is a natural number of not less than 1 and not more than p) belongs are used as training data; and
the plurality of correct intensity distributions $I''1, I''2, ... , I''m$ are set by repeating (a) a derivation process and (b) an updating process, (a) the derivation process deriving, by use of an electromagnetic field simulation, a detected intensity distribution $I'(j)$ which is an intensity distribution of signal light detected by the optical detection section in a case where the intensity distribution of the signal light input into the optical computation section is the input intensity distribution $I(j)$, (b) the updating process updating the plurality of correct intensity distributions $I''1, I''2, ... , I''m$ so that a loss function L takes a small value, (1) the loss function L taking a smaller value as a similarity between the detected intensity distribution $I'(j)$ and, among the plurality of correct intensity distributions $I''1, I''2, ... , I''m$, a correct intensity distribution $I''k(j)$ corresponding to the class $ck(j)$ increases, and (2) the loss function L taking a larger value as a similarity between the detected intensity distribution I'(j) and, among the plurality of correct intensity distributions I"1, I"2, ... , I"m, a correct intensity distribution I"k(k≠k(j)) which is not the correct intensity distribution I"k(j) corresponding to the class ck(j) increases.

3. The learning method according to claim 2, wherein:

the similarity is an Euclidean distance between a peak position (Xk(j),Yk(j)) of the correct intensity distribution I"k(j) and a peak position (X'(j),Y'(j)) of the detected intensity distribution I'(j); and
the loss function L is defined by the following formula:

$$ L = \frac{1}{p}\sum_{j=1}^{p}[(X'(j) - Xk(j))^2 + (Y'(j) - Yk(j))^2] + \sum_{j=1}^{p}\sum_{k \neq k(j)} I'(j)(Xk, Yk) $$

where I'(j)(Xk,Yk) is a value of the detected intensity distribution I'(j) at a peak position (Xk,Yk) of a correct intensity distribution I"k which is not the correct intensity distribution I"k(j).

4. The learning method according to claim 2, wherein:

the similarity is an angle $\theta_{k,j}$ made by a correct intensity distribution I"k and the detected intensity distribution I'(j); and
the loss function L is an ArcFace-type loss function, a SphereFace-type loss function, a CosFace-type loss function, or a loss function of a combination type, each of which is defined by using the angle $\theta_{k,j}$.

5. The learning method according to claim 2, wherein:

the similarity is an inner product I"$k^T$I'(j) of a correct intensity distribution I"k and the detected intensity distribution I'(j); and
the loss function L is a loss function of a center loss type defined by using the inner product I"$k^T$I'(j).

6. A manufacturing method for manufacturing an optical computation device, the optical computation device including: an optical computation section which includes an optical modulation element including a plurality of cells having phase modulation amounts which have been set independently of each other or phase modulation amounts which are settable independently of each other; an optical detection section which detects an intensity distribution of signal light output from the optical computation section; and an estimation section which refers to a plurality of correct intensity distributions corresponding to a respective plurality of classes and estimates, on a basis of the intensity distribution detected by the optical detection section, a class to which information represented by an intensity distribution of signal light input into the optical computation section belongs, the manufacturing method comprising:
training the optical computation device by using a learning method recited in any one of claims 1 to 5.

7. An optical computation device comprising:

an optical computation section which includes an optical modulation element including a plurality of cells having phase modulation amounts which have been set independently of each other or phase modulation amounts which are settable independently of each other;
an optical detection section which detects an intensity distribution of signal light output from the optical computation section; and
an estimation section which refers to a plurality of correct intensity distributions corresponding to a respective plurality of classes and estimates, on a basis of the intensity distribution detected by the optical detection section, a class to which information represented by an intensity distribution of signal light input into the optical computation section belongs,
the plurality of correct intensity distributions being set so that a correct intensity distribution having a highest similarity to the intensity distribution detected by the optical detection section serves as a correct intensity distribution corresponding to a class to which the information represented by the intensity distribution of the signal light input into the optical computation section belongs.

8. The optical computation device according to claim 7, wherein:

the optical computation section includes a plurality of optical diffraction layers formed in a dry gel, each of the plurality of optical diffraction layers serving as the optical modulation element.

9. The optical computation device according to claim 7, wherein:
the optical computation section includes

an optical modulation substrate including a plurality of areas each serving as the optical modulation element and a mirror disposed so as to face the plurality of areas.

FIG. 1

## FIG. 2

(a)

C

11ai

100 μm

100 μm

(b)

Li-1

C

C11

P

M

C13

C17

C14

C15 C16

C12

## FIG. 3

## FIG. 4

FIG. 5

2

21b    21

23  E  22

L0    L1    L2    L3

21a1    21a2    21a3

## FIG. 6

(a)

C

21ai

100μm

100μm

(b)

Li-1

C

P

C11

C13

M

C17

C14

C15  C16

C18

FIG. 7

FIG. 8

FIG. 9

FIG. 10

## INTERNATIONAL SEARCH REPORT

| International application No. |
| --- |
| **PCT/JP2023/019617** |

| | |
| --- | --- |
| **A.** | **CLASSIFICATION OF SUBJECT MATTER** |

*G06N 3/067*(2006.01)i; *G02F 1/09*(2006.01)i; *G02F 1/13*(2006.01)i; *G02F 3/00*(2006.01)i; *G06E 3/00*(2006.01)i; *G06N 3/09*(2023.01)i
FI:    G06N3/067; G06N3/09; G02F3/00 501; G02F1/13 505; G02F1/09 503; G06E3/00

According to International Patent Classification (IPC) or to both national classification and IPC

| | |
| --- | --- |
| **B.** | **FIELDS SEARCHED** |

Minimum documentation searched (classification system followed by classification symbols)

G06N3/067; G02F1/09; G02F1/13; G02F3/00; G06E3/00; G06N3/09

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | US 2021/0142170 A1 (THE REGENTS OF THE UNIVERSITY OF CALIFORNIA) 13 May 2021 (2021-05-13) <br> paragraphs [0210]-[0225] | 1-9 |
| A | WO 2022/130690 A1 (FUJIKURA LIMITED) 23 June 2022 (2022-06-23) <br> paragraphs [0009]-[0014], fig. 1, 2 | 1-9 |

☐ Further documents are listed in the continuation of Box C.        ☑ See patent family annex.

| | |
| --- | --- |
| * | Special categories of cited documents: |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 August 2023** | **15 August 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2023/019617**

| Patent document cited in search report | | | Publication date (day/month/year) | Patent family member(s) | | | Publication date (day/month/year) |
|---|---|---|---|---|---|---|---|
| US | 2021/0142170 | A1 | 13 May 2021 | WO | 2019/200289 | A1 | |
| WO | 2022/130690 | A1 | 23 June 2022 | US | 2023/0176267 | A1 | |
| | | | | paragraphs [0016]-[0022], fig. 1, 2 | | | |
| | | | | CN | 115516372 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 20212327170 A